# EUROPEAN PATENT APPLICATION

(11) **EP 2 930 336 A1**
(43) Date of publication of application: **14.10.2015**
(21) Application number: 14382137.9
(22) Date of filing: 10.04.2014
(51) Int. Cl.: F02D 13/02, F02D 41/40, F02D 19/02, F02D 41/00

(54) **LPG direct injection engine**

(71) Applicant: Repsol, S.A., 28045 Madrid (ES); AVL List GmbH, 8020 Graz (AT)
(72) Inventor: ARÍZTEGUI CORTIJO, Javier, 28935 Madrid (ES); WOLFF ELÓSEGUI, Guillermo, 28935 Madrid (ES); GUTIÉRREZ SERNA, Jaime, 28935 Madrid (ES); FÜRHAPTER, Alois, A-8020 Graz (AT)
(74) Representative: Stiebe, Lars Magnus

(57) **Abstract**

Liquefied petroleum gas direct injection engine (100) comprising at least one cylinder with a combustion chamber (1) having a spark plug (2), one or more intake valves (4), and one or more exhaust valves (5). The engine (100) further comprises: at least one injector (6) for injecting liquefied petroleum gas in liquid state directly into the combustion chamber, the liquefied petroleum gas being injected at a pre-established pressure value; a high pressure pump (9) for feeding pressurized liquefied petroleum gas to at least one injector (6); and an electronic control unit (13) configured to operate the at least one injector (6) for injecting the liquefied petroleum gas during a specific injection time period or periods such that a predefined target mass of liquefied petroleum gas is injected, and between 360 º BTDC and 60 º BTDC of the engine cycle.

## Description

### TECHNICAL FIELD

The present invention relates to the field of direct injection engines, and specifically, of direct injection engines using liquefied petroleum gases (also known as LPG, AutoGas, propane, butane).

### STATE OF THE ART

Gasoline Direct Injection (GDI) engines are a variant of fuel injection employed in two-stroke and four-stroke gasoline engines, where the air and gasoline are not pre-mixed outside the cylinder: air comes in via the intake manifold, while the gasoline is injected directly into the cylinder and/or combustion chamber.

One of the problems in the technology of gasoline direct injection is the formation of particles during combustion. These particles come from fuel droplets that have not been completely evaporated when combustion occurs.

In order to avoid this problem, it is necessary to optimize the injection timing for lowest particle emissions which represents usually not the optimum in efficiency, thereby losing part of the attractiveness of direct injection. Also, with gasoline as fuel, a very high fuel injection pressure (up to 250 bar in modern systems) is needed to produce small droplets and to enable this way sufficient primary mixture formation. Although an optimization of the gasoline direct injection parameters (pressure and timing) can reduce particle formation, it cannot be fully avoided, which makes it challenging to meet future emission legislation limits, especially with small downsized engines in big vehicles and therefore high loads. In particular, in cold start and during warm up conditions particle emissions with gasoline are a problem to comply with future emission standards. In light of this, the introduction of a particle filter might be necessary.

There exist kits for transforming a gasoline vehicle in a vehicle that runs on liquefied petroleum gas (LPG). Until recently, these kits injected the LPG in the intake duct (indirect injection, port fuel injection PFI or multiport injection MPI). In many cases, these kits are designed, marketed and installed by companies not related to the vehicle manufacturer, which implies *inter alia* losing the warranty of the vehicle manufacturer.

During their operation, these kits take advantage of some original settings of the gasoline engine, such as injection timing, ignition timing, lambda (air/fuel ratio) control, and they need some additional settings, such as injection pressure and duration.

One of the major drawbacks of these LPG kits is that the control of the engine during transients is poor and, therefore, pollutant emissions (carbon monoxide CO, total hydrocarbons THC, and nitrogen oxides NOx) of the modified engine are usually higher than those measured with the original gasoline engine.

Kits for injecting LPG using the original fuel injectors of the vehicle (LPG direct injection) have been recently developed. For this purpose, they use the whole high-pressure system of the original vehicle, and they require the installation of some additional components, such as a tank, an electric transfer pump and fuel selector valves, for bringing the LPG to the high pressure pump. These kits also include an electronic control unit ECU for regulating these additional LPG components, but this ECU does not alter the original settings of the gasoline engine. The performance of the resulting vehicle is therefore not optimised.

A critical example of this lack of optimisation comes from the fact that gasoline and LPG differ greatly in terms of energy density (MJ/m³). Thus, fuel injection control for LPG must be adjusted to inject the right amount of fuel. This is particularly important for the beginning of combustion (fuel path precontrol) after a pause in injection (fuel cut-off), such as those occurring during deceleration phases of the engine, because pollutant emissions increase dramatically in case the amount of fuel is not correct.

Additionally the sensitivity to temperature and pressure of the fuel density is significantly higher for LPG than for gasoline causing problems in the fuel path pre-control. This requires special compensation functionalities in the ECU to guarantee a precise enough fuel metering.

An additional drawback of these LPG kits is that potential problems such as sticking injection valves or damaged high pressure pumps may arise on some of the components which were initially designed for use with gasoline and which are run on LPG, in case they are not approved for LPG operation.

Another problem is that, due to the different fuel density of gasoline and LPG, the design of the gasoline components regarding flow capacity might be not sufficient for the operation with LPG.

Therefore, there is a need for a direct injection engine whose hardware and operation have been adapted and optimised for the use of LPG.

### DESCRIPTION OF THE INVENTION

The present invention refers to an LPG direct injection engine whose cylinders comprise:
- a combustion chamber having a spark plug; and,
- one or several intake valves for letting air come inside the combustion chamber; and,
- one or several exhaust valves for letting exhaust gases go out of the combustion chamber.

According to a first aspect of the invention, the LPG direct injection engine further comprises:
- at least one injector for injecting liquefied petroleum gas in liquid state directly into the combustion chamber, the liquefied petroleum gas being injected at a pre-established pressure value,
- a high pressure pump for feeding pressurized liquefied petroleum gas to the injectors;
- an electronic control unit configured to operate the at least one injector for injecting the liquefied petroleum gas:
   - during a specific time period or periods such that a predefined target mass of liquefied petroleum gas is injected; and
   - between 360 º BTDC and 60 º BTDC of the engine cycle.

That is, in the LPG direct injection engine of the present invention late injection of the liquefied petroleum gas LPG in the combustion chamber takes place but the formation of particles during combustion is avoided because the LPG is fully evaporated, even if injected between 360 º BTDC and 60 º BTDC of the engine cycle.

Additionally, the duration of the LPG injection is set to reach a predefined target mass of LPG, which has an impact on reducing pollutant emissions (CO, THC and NOx) in the three-way catalyst downstream the engine.

This specific time period or periods is preferably calculated by means of an estimation model of the LPG density at a nozzle of such at least one injector

The estimation model of the LPG density preferably uses a density map based on physical properties of the liquefied petroleum gas, and uses as input a measured pressure of the liquefied petroleum gas in the nozzle and a determined temperature of the liquefied petroleum gas in the nozzle.

The LPG direct injection engine preferably further comprises a pressure sensor in the connection between the high pressure pump and the at least one injector for measuring the pressure of the liquefied petroleum gas, and the estimation model of the LPG density is based, among others on such measured pressure value. The LPG direct injection engine preferably also comprises a temperature sensor to measure the temperature of the liquefied petroleum gas directly at some point in the connection between the high pressure pump and the at least one injector or to measure the temperature of other components, such as a wall or a coil of the injector, and estimate the temperature of the LPG by means of a correlation model. The temperature of the liquefied petroleum gas in the nozzle is preferably determined using a set of parameters of the engine.

In the LPG direct engine of the invention the pre-established pressure value is preferably below 200 bar, without compromising good particle emissions levels. In fact, the injection pressure can be significantly reduced compared to typical gasoline operation without incurring in particle emissions due to the favourable vaporization properties of LPG. This allows further efficiency optimization of the engine since the power required by the high pressure pump, which is extracted from the engine, can be reduced.

According to a preferred embodiment, the engine has a variable valve system which allows the optimization of the timing at which the intake and/or exhaust valve opening and closing events take place. This variable valve system is controlled by the electronic control unit.

By valve overlap it is understood the time that the closing of the exhaust valve overlaps the opening of the intake valve; that is, valve overlap refers to the time when the intake and exhaust valves are partially open at the same time.

According to a preferred embodiment, the electronic control unit is configured to operate the intake valve(s) and the exhaust valve(s) in such a way that the valve overlap is 2 to 10 crank angle degrees greater for LPG than for a gasoline direct injection engine under the same load conditions. This operation of the intake and exhaust valves is possible because LPG has a higher tolerance than gasoline to the presence of residual gases in the combustion chamber, thus allowing a greater valve overlap. This in turn enables a better energy efficiency of the engine since reaspiration of exhaust gases into the cylinder reduces the work expended by the engine during the intake stroke.

According to a preferred embodiment, the electronic control unit is arranged to operate the spark plug for igniting the mixture of air and liquefied petroleum gas in such a way that the centre of combustion (the time at which 50 % of the fuel injected has been burnt) is 6 to 10 ° ATDC throughout the whole map of the engine. Alternatively, if the engine reaches its maximum combustion pressure or knocking combustion condition, ignition timing for LPG may be retarded similar to gasoline operation. Nevertheless the resulting ignition timing can be kept some degrees crank angle earlier compared to gasoline, preferably between 5 to 8 crank angles degrees earlier, and so at significantly better engine efficiency at high loads. Based on the natural characteristics of LPG (high octane number), it is possible to operate the spark plug throughout a significantly bigger area of operating points of the engine without incurring in abnormal combustion (knocking) despite the use of optimal settings to minimise fuel consumption and without the need to enrich the air/fuel mixture for component protection. This enables a minimisation of fuel usage, particularly in the range of high loads where engines are more prone to knocking.

According to a preferred embodiment, the LPG direct injection engine of the invention has a cylinder deactivation system which enables the engine to operate either with all the cylinders simultaneously or with half the cylinders. Operating with half the cylinders at low engine loads increases the efficiency of the engine by reducing pumping losses. The cylinder deactivation system is controlled by the electronic control unit and makes use of a specific variable valve system. In this case, the variable valve system changes the profile of the cam acting on the intake and exhaust valves of the deactivated cylinders so as to keep the valves closed. In this preferred embodiment, the electronic control unit eliminates injection and ignition in the deactivated cylinders.

A second aspect of the invention relates to method for controlling a liquefied petroleum gas direct injection engine, the method comprising:
- operating at least one injector of the direct injection engine for injecting liquefied petroleum gas in liquid state directly into a combustion chamber of the direct injection engine, the liquefied petroleum gas being injected at a pre-established pressure value;
- operating the at least one injector for injecting the liquefied petroleum gas between 360 BTDC and 60 º BTDC of the engine cycle; and
- operating the at least one injector for injecting the liquefied petroleum gas during a specific time period such that a predefined target mass of liquefied petroleum gas is injected.

The invention also relates to an LPG direct injection engine comprising at least one cylinder, each comprising:
- a combustion chamber having a spark plug; and,
- one or more intake valves for letting air come inside the combustion chamber; and,
- one or more exhaust valves for letting exhaust gases go out of the combustion chamber; the LPG direct injection engine further comprising:
- at least one injector for injecting liquefied petroleum gas in liquid state directly into the combustion chamber, the liquefied petroleum gas being injected at a pre-established pressure value,
- a high pressure pump for feeding pressurized liquefied petroleum gas to the injectors; and
- an electronic control unit configured to operate the at least one injector for injecting the liquefied petroleum gas in such a way that valve overlap is optimized for LPG operation, about 2 to 10 crank angle degrees greater than for a gasoline direct injection engine working under the same load and speed conditions.

An additional aspect of the invention relates to a control method of a liquefied petroleum gas direct injection engine, which comprises:
- operating at least one injector of the direct injection engine for injecting liquefied petroleum gas in liquid state directly into a combustion chamber of the engine, the liquefied petroleum gas being injected at a pre-established pressure value; and
- operating one or more intake valve or valves and one or more exhaust valve or valves of the direct injection engine such that valve overlap is 2 to 5 crank angle degrees greater than for a gasoline direct injection engine working under the same load and speed conditions.

The different aspects and embodiments of the invention defined in the foregoing can be combined with one another, as long as they are compatible with each other.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 schematically shows an LPG direct injection engine according to the invention.
Figure 2 schematically shows a high pressure injection pump.
Figure 3 shows the operation phases of the high pressure injection pump.
Figure 4 shows a typical current profile used to actuate a solenoid injector for direct injection.
Figure 5 shows the effect of injection timing for gasoline and LPG on performance and emissions of the engine for 2000 rpm and 2 bar mean effective pressure.
Figure 6 shows the variation of density with temperature and pressure for gasoline, LPG and pure propane.
Figure 7 shows the logic of the empirical model proposed for estimating the density of LPG in the nozzle of the injector.
Figure 8 shows the physical model of heat and mass transfer inside the injector,
Figure 9 shows a typical lambda profile for correct operation of the three-way catalyst.
Figure 10 schematically shows the layout of the intake side of the engine with a throttle valve.
Figure 11 shows a typical pressure-volume diagram for the gas exchange phase of a spark ignited engine.
Figure 12 shows a valve-lift-crank angle diagram of the exhaust and intake valves and the effect of variable valve actuation.
Figure 13 shows the advantage of LPG over gasoline for combustion phasing at full load conditions.
Figure 14 shows the comparison of lambda values for LPG and gasoline at full load conditions.
Figure 15 shows the comparison of thermal efficiency values for LPG and gasoline at full load conditions.

### DESCRIPTION OF A PREFERRED EMBODIMENT

The following description is not to be taken in a limiting sense but is given solely for the purpose of describing the broad principles of the invention. Embodiments of the invention will be now described by way of example, with reference to the above-mentioned drawings showing elements and results according to the invention.

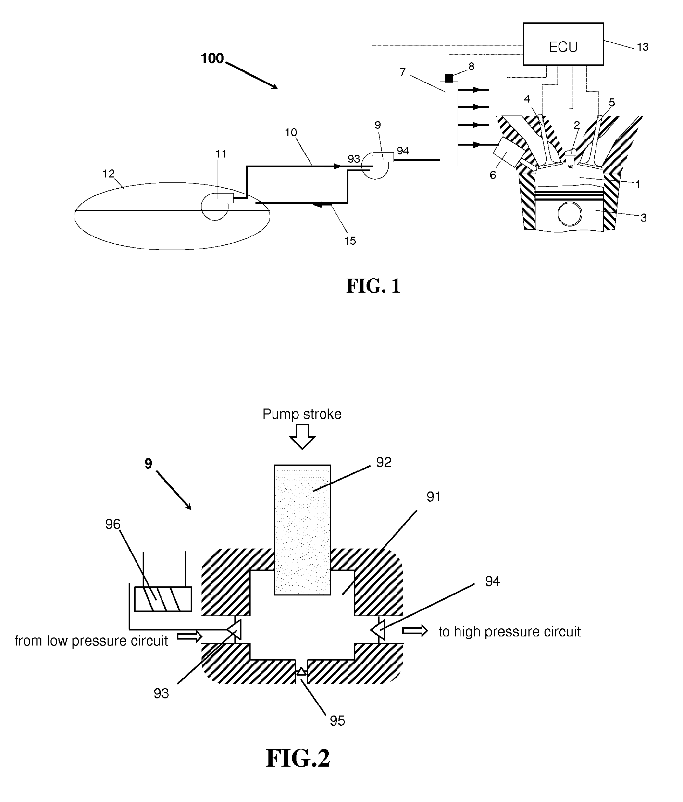

As shown in Figure 1, the liquefied petroleum gas (LPG) direct injection engine of the invention comprises:
- a combustion chamber 1 having a spark plug 2;
- a piston 3;
- an intake valve 4 or valves for letting air come inside the combustion chamber;
- an exhaust valve 5 or valves for letting exhaust gases go out of the combustion chamber;
- one or more injectors 6 for injecting liquefied petroleum gas in liquid state directly into the combustion chamber, the liquefied petroleum gas being injected at a pressure of up to 200 bar; and
- a high pressure pump 9 for feeding pressurized liquefied petroleum gas to the injectors;
- an electronic control unit 13, ECU, for controlling the operation of the direct injection engine.

### Overall physical description

During operation of the engine, the intake valve(s) 4 is opened and air is inducted inside the cylinder by means of the downward motion of the piston. During the intake and/or the compression stroke, LPG is injected directly inside the combustion chamber through the injector 6, mixing with the air present therein. Around top dead centre (TDC), the spark plug 2 releases a spark which ignites the mixture of air and LPG. The pressure increase caused by the combustion pushes the piston 3, which generates mechanical power. Finally, the exhaust valve(s) 4 is opened and the combustion gases are expelled to the exhaust system.

### Control system

In the embodiment described, the electronic control unit 13 supervises the whole process. In particular, the ECU controls the following features:
- The time at which the intake valve(s) is opened.
- The time at which the exhaust valve(s) is opened.
- The pressure at which the high pressure pump delivers the LPG to the injector.
- The time at which the injector(s) starts delivering LPG to the engine.
- The time at which the injector(s) stops delivering LPG to the engine.
- The time at which the spark plug releases the spark.

In the following paragraphs a brief description of the way the ECU realizes this control in the LPG direct injection engine of the present invention is provided.

Actuation of the intake and exhaust valves is done mechanically by means of a cam per valve. These cams are in turn part of a camshaft or camshafts which rotate synchronically with the crankshaft of the engine moved by a chain or belt and a pulley at one end of the camshaft(s). By means of electric or electrohydraulic actuators, the ECU might rotate the camshaft(s) with respect to the pulley moved by the chain or belt. This rotation alters the timing of the opening and closing events of the valves with respect to the engine cycle. In order for the ECU to keep track of the relative position of the crankshaft and the camshafts, a timing signal is generated by each of these shafts and read by the ECU. Usually, these timing signals are pulse trains generated by the teeth of a gear mounted on the shaft when passing near a magnetic or Hall effect sensor. The ECU also uses the timing signals to control the rest of the timed controls described in the following paragraphs.

As also shown in Figure 1, modern high pressure injection systems typically comprises a low pressure fuel supply line 10 with a low pressure pump 11 submerged in a tank 12, a high pressure pump 9 with included flow control valve and optionally a return line 15 to the tank 12, a high pressure rail 7 with a pressure sensor 8 at one end and high pressure direct injection injector 6.

In Figure 2 the details of the high pressure pump 9 are depicted. These pumps comprise:
- a high pressure chamber 91;
- a plunger 92 which moves in and out of the high pressure chamber 91;
- a first check valve 93 on the intake side to avoid back flow to the low pressure side;
- a second check valve 94 to avoid back flow from the high pressure rail 7;
- a safety check valve 95 to avoid over pressure in the high pressure pump 9;
- a solenoid 96 which enables to keep the first check valve 93 open for controlling fuel mass flow as described below (the solenoid together 96 with the first check valve 93 form a flow control valve).

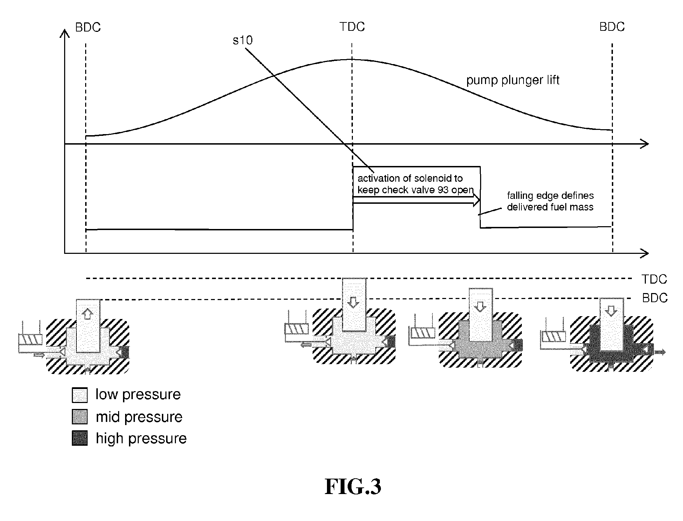

The control of the pressure delivered by the high pressure pump 9 is based on the actual pressure in the rail 7 read by the pressure sensor 8. During operation of the engine, LPG flows into the rail coming from the high pressure pump 9 and flows out of the rail through the injectors 6. As schematically shown in Figure 3, by controlling the amount of fuel transferred from the pump 9 to the rail 7, it is possible to control the pressure in the rail 7. For this purpose, during operation of the engine, the plunger 92 moves in and out of the high pressure chamber 91, typically actuated by a cam from one engine camshaft. During the outward stroke, LPG flows from the low pressure side to the high pressure chamber 91 filling it with fuel. During the inward stroke, fuel is forced through the second check valve 94 to the high pressure rail 7, while the first check valve 93 prevents flow of LPG to the low pressure side. In order to transfer the exact amount of LPG to the rail 7 to reach the desired pressure, the solenoid 96 is actuated by the ECU 13 (s10) to keep the first check valve 93 open during part of the inward stroke. While the first check valve 93 is open, the flow of LPG goes to the low pressure side and not to the high pressure pump 9; the amount of LPG delivered depends on the closing time of the first check valve 93. Typically, the electrical signal for controlling the solenoid 96 is synchronized to the pump stroke by means of a timing signal coming from one cam.

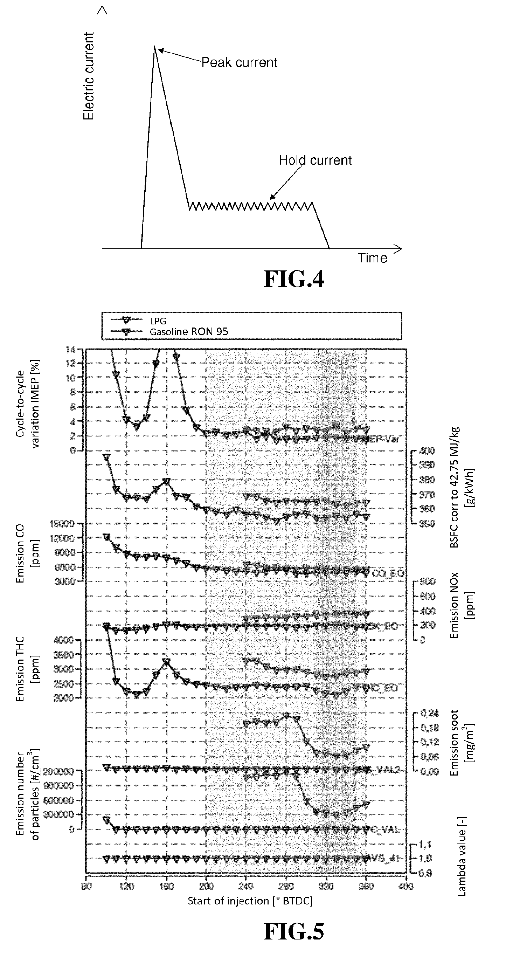

Modern high pressure injectors are typically equipped with solenoids to control the opening and closing of the injectors. These solenoids are actuated by the electronic control unit. Usually, the actuation is based on a characteristic electric current-time profile with three phases as shown in Figure 4: the opening is achieved by a peak current, then the injector is kept open with a hold current and finally the injector is closed when the current is withdrawn. Other variants may require a longer period of peak current.

In modern engines, the spark for the combustion is generated by a spark plug 2. This device generates a discharge between two electrodes when a high voltage (e.g. above 20 kV) is applied between these electrodes. Typically, the high voltage is generated in turn by an ignition coil fed from the battery. The ECU can control the timing of spark release by switching off and on the current of the primary circuit of the ignition coil with a solid-state device actuated by a digital signal.

As an optional feature, the embodiment considered may deactivate some of the cylinders of the engine. The deactivation process involves a certain course of events. First, the exhaust valve(s) of the cylinder to be deactivated is opened to discharge the gases from the previous combustion. Second, the intake valve(s) is kept closed. Third, fuel injection and spark have to be withheld. Finally, the exhaust valve is kept closed. The whole process is controlled by the ECU. To withhold fuel injection and spark, the ECU does not send the signals to the solenoids of the injectors or to the solid-state switch of the ignition system. To keep the intake and exhaust valves closed, the camshafts have to be specially designed for this purpose. These camshafts have two cams to actuate the valve(s) of the deactivated cylinders: one cam has the normal profile to open and close the valve, while the other cam has a round profile which never opens the valve. Electric actuators installed next to the camshafts of the engine move the camshafts longitudinally in order to engage one or the other cam. The actuators are operated by the ECU when needed.

As an alternative to the valve actuation system described above, the intake and exhaust valves could be directly actuated by a solenoid instead of a mechanical actuation by means of cams. In that case, the ECU could withhold the opening of the valves by not generating the electric current which actuates the solenoids.

### Advantages over particle emissions

Once it has been established the different settings of the ECU, it is possible to understand the advantages of the embodiment over the state of the art technology. The first advantage is the possibility to delay injection without incurring in particle formation. Gasoline direct injection engines are prone to produce particle emissions. The reason for this may be found in the difficulties to reach a thorough mixing of the air inside the cylinder with the gasoline coming out of the injector. This leads to the presence of small droplets of gasoline when combustion starts, which tend to produce soot due to incomplete combustion. To counteract this effect there are three main strategies:
- Advancing injection with respect to the engine cycle so as to give enough time to reach a homogeneous mixture of fuel and air
- Increasing injection pressure and reducing the holes of the nozzle of the injector so as to produce smaller droplets of fuel which may be evaporated more easily
- Dividing the fuel injection in several portions (typically two or three) and spacing the injection events during the intake and the compression strokes so as to guarantee that the air motion inside the cylinder brings fresh air (not containing fuel) near the injector

When using LPG in the direct injection engine of the present invention, these strategies are no longer necessary and injection can be delayed extraordinarily. The volatility of the fuel greatly improves mixture formation and it is possible to inject LPG in a single injection, with moderate pressures (below 200 bar) and relatively late in the engine cycle (up to 200 crank angle degrees before top dead centre for a single injection event). In fact, particle formation is no longer a problem and other design limits of the engine are reached such as irregular combustion (cycle to cycle variations) with the attending increase in fuel consumption.

Figure 5 shows a comparison of the effect of the timing of the start of injection on the combustion and emissions of an engine for 2000 rpm and 2 bar of mean effective pressure. With gasoline, the only convenient window regarding particle formation for injection goes from 350 to 310 °BTDC. As injection is retarded further, particle emission is multiplied by three. When LPG is considered, the convenient injection window for this load point goes from 360 to 200 °BTDC. In fact, injection may be retarded even further without producing particles, but other engine parameters such as cycle-to-cycle variations (measured as the coefficient of variation of indicated mean effective pressure IMEP) and fuel consumption are degraded to unacceptable levels.

The overall result of this reduction in particle formation for the LPG direct injection engine of the present invention is that, when the engine is installed in a vehicle, it complies with the strictest emission limitations, such as Euro 6c, without a particle filter installed in the exhaust.

As stated above, in the LPG direct engine of the invention the injection pressure is set preferably below 200 bar without compromising good particle emissions levels. In fact, the injection pressure can be significantly reduced compared to typical gasoline operation without incurring in particle emissions due to the favourable vaporization properties of LPG. Depending on the load and speed conditions, injection pressure can be set between 75 and 150 bar for LPG for areas where gasoline must be set to the maximum injection pressure (up to 250 bar in modern engines). Since the high pressure pump is moved by the engine, thereby consuming energy in the process (internal losses of the engine), this reduction in injection pressure increases the overall efficiency of the engine and less fuel is needed for equivalent or better performance and emission levels.

### Advantages over injection mass control

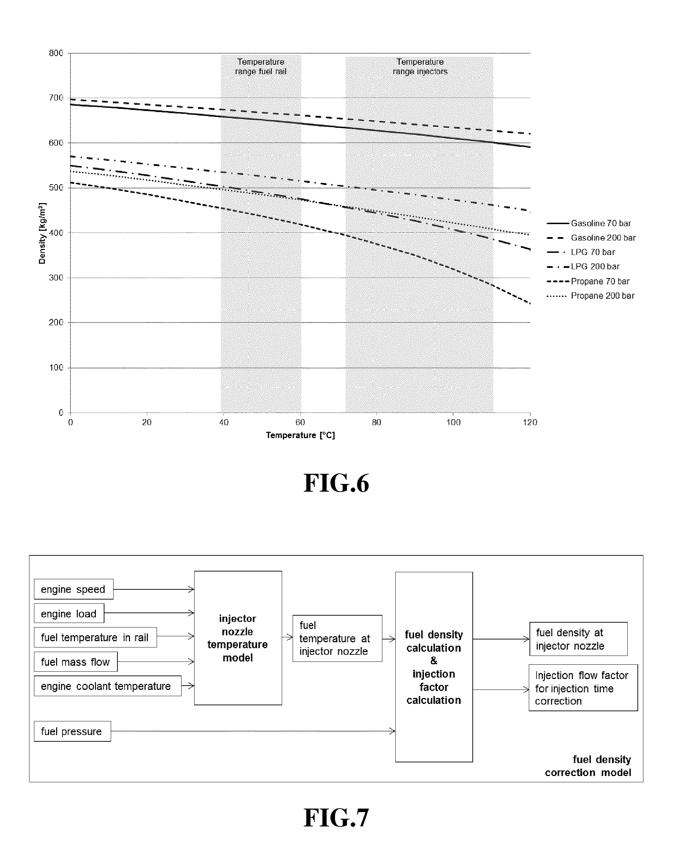

In gasoline engines, the combination of injection pressure control (by means of the flow control valve of the high pressure pump) and injection timing control enables the ECU to meter the volume of fuel delivered to the engine. In order to have an accurate control over the combustion of the engine, the mass of fuel (and not the volume) must be metered. Thus, the control system described above is accurate as long as the density of the fuel remains reasonably constant. When using LPG, this is not the case since the variation of density with temperature is much more pronounced than with gasoline, as shown in Figure 6. In the temperature range registered inside the injector, a normal gasoline may vary its density by 4-6 % depending on the pressure and the temperature, while LPG may vary its density by 8-28 % depending on the pressure, the temperature and its composition. In the LPG direct injection engine of the present invention the ECU estimates the density of the LPG inside the injector and adjusts the volume of fuel injected in order to reach a predetermined target mass.

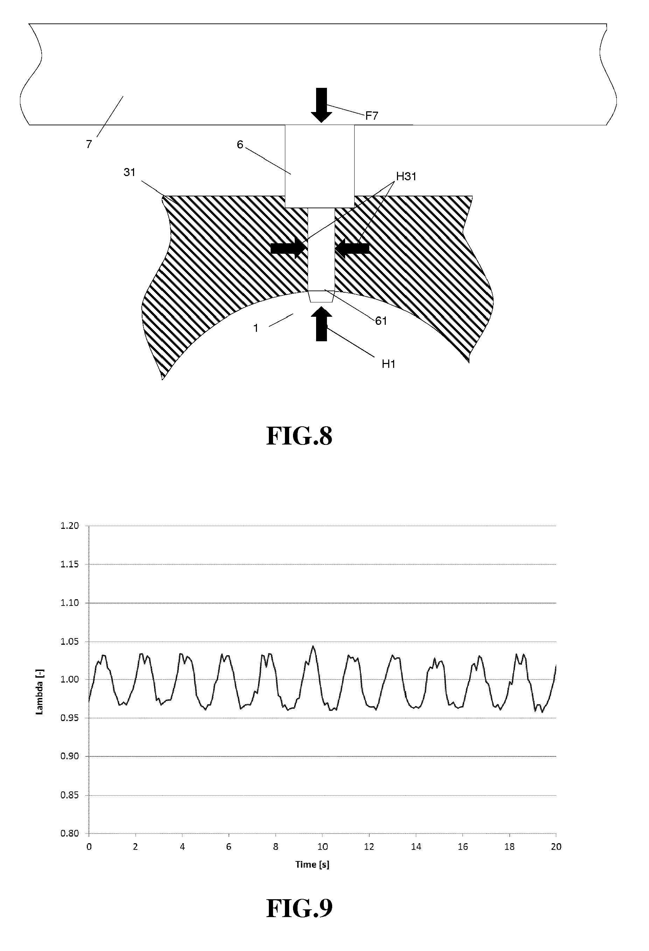

The estimation of the fuel density is done by means of an empirical model. The logic of the model is summarized in Figure 7 and the physics of the model is depicted in Figure 8.

Figure 8 shows the fuel rail 7, the cylinder head 31, the combustion chamber 1, the body of the injector 6 and the nozzle 61 of the injector. The temperature of the fuel in the nozzle 61 is affected by the heat H1 coming from the combustion chamber 1, the heat H31 coming from the cylinder head 31 and the flow F7 of fuel coming from the rail. Thus, as shown in Figure 7, the inputs to the estimation model of the LPG density are: engine speed, engine load, fuel temperature inside the fuel rail, fuel mass flow, engine coolant temperature and fuel pressure in the rail. The engine speed and load are used to estimate the heat transfer H1 from the combustion chamber 1 to the injector nozzle 61. The fuel temperature in the rail 7 and the fuel mass flow are used to estimate the cooling effect of the fuel flow inside the injector 6. The engine coolant temperature is used to estimate the heat transfer H31 from the cylinder head 31 to the injector body 6. With these data, the temperature of the LPG in the injector nozzle 61 is calculated. This temperature and the measured fuel pressure (using a pressure sensor) lead to the estimation of the LPG fuel density by means of a density map based on the physical properties of the LPG. With the calculated fuel density and the pre-defined target mass, the ECU calculates a correction factor for the injection duration. In parallel, the ECU has in its memory a basic injection duration value for each condition of the engine (load and speed), which has been calibrated for LPG at a certain temperature. Applying the correction factor to the basic injection duration, the ECU is able to inject the exact pre-defined target mass of LPG in the combustion chamber 1.

### Advantages over CO, HC and NOx control

In modern spark ignition engines for automotive application, exhaust emissions are controlled by a three-way catalyst. This device oxidizes carbon monoxide (CO) and hydrocarbons (HC) coming out of the engine to carbon dioxide (CO₂) and reduces nitrogen oxides (NOx) to nitrogen (N₂). The prerequisite for these chemical reactions to take place with a high efficiency is that the engine works around stoichiometric conditions, alternating phases with an excess of fuel with phases with an excess of air, as shown in Figure 9. During the phases with an excess of air, the oxygen coming out of the engine is in part stored in the catalyst, in part used to oxidize the CO and HC. During the phases with an excess of fuel, hydrocarbons are in part stored in the catalyst, in part used to reduce NOx. The overall result is that the catalyst is capable of oxidizing and reducing at the same time.

In order to control the air to fuel mass ratio, one or two lambda sensors are usually mounted in the exhaust system. With the signal of these sensors, it is possible to establish a closed-loop control of the amount of fuel needed for the next combustion. However, a critical situation arises when the injection of fuel has stopped (for example, because the driver of the vehicle has released the accelerator pedal) and must be restarted (when the accelerator pedal is pressed again). Fresh air has been passing through the cylinders of the engine and flowing through the three way catalyst during the fuel cut-off. This means that the three-way catalyst is full of stored oxygen. Thus, when injection is restarted, a phase with excess of fuel must be used to initiate the alternating sequence of the catalyst and keep emissions under control. If a phase of excess air is employed, NOx coming out of the engine will pass through the catalyst without reacting and emissions will not be controlled. On the other hand, if the excess of fuel is too great, some CO and HC might be able to pass through the catalyst and emissions will not be controlled. Therefore, a very precise mass of fuel must be injected. The problem is that, when initiating injection, there is no signal from the lambda sensors to close the control loop and the ECU has to guess the initial amount of fuel. With the empirical model described above, the ECU is able to make a very accurate guess of the mass of fuel injected and to keep emissions under control.

As explained in the state-of-the-art section, there exist kits in the market to transform a gasoline direct injection engine into a LPG direct injection engine. These kits use the original injection settings for gasoline to calculate the injection settings for LPG. Due to the deviations in LPG density described above and the temperature sensitivity of the fuel density, these kits are not able to adjust correctly the precontrol value of the mass of fuel injected when restarting injection. Therefore, in some cases, this leads to high emission periods and non-conformities with the strictest emission limitations such as Euro 6b and 6c.

### Advantages over valve overlap

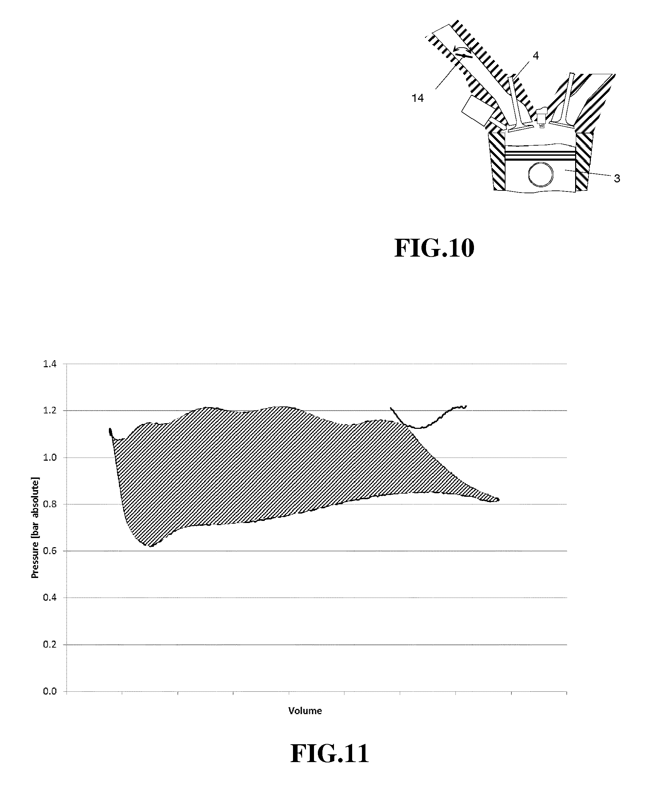

For any given engine speed, spark ignition engines are able control the torque, and consequently the power, delivered to the crankshaft by adjusting the mass of air induced inside the cylinders. There are different ways to realise this control, but the most popular one is the variable restriction of the intake air flow by means of a butterfly valve inserted in the intake duct and usually called a throttle valve. As shown in Figure 10, when the throttle valve 14 is partially closed, the piston 3 sucks air and pressure drops across the restriction creating a certain vacuum downstream. Thus, for a given volume of the cylinder, the mass of air introduced inside the engine decreases with the reduction in pressure. In order to force air through the restriction, the engine expends some energy which is not recovered later. Figure 11 shows a typical pressure-volume diagram of the exhaust and intake strokes of a spark ignition engine. The shaded area represents the internal energy losses (called pumping losses) of the engine. In order to provide energy for these losses, the engine must consume some fuel. Thus, for a given performance of the engine, any reduction in pumping losses results in an improvement in fuel consumption.

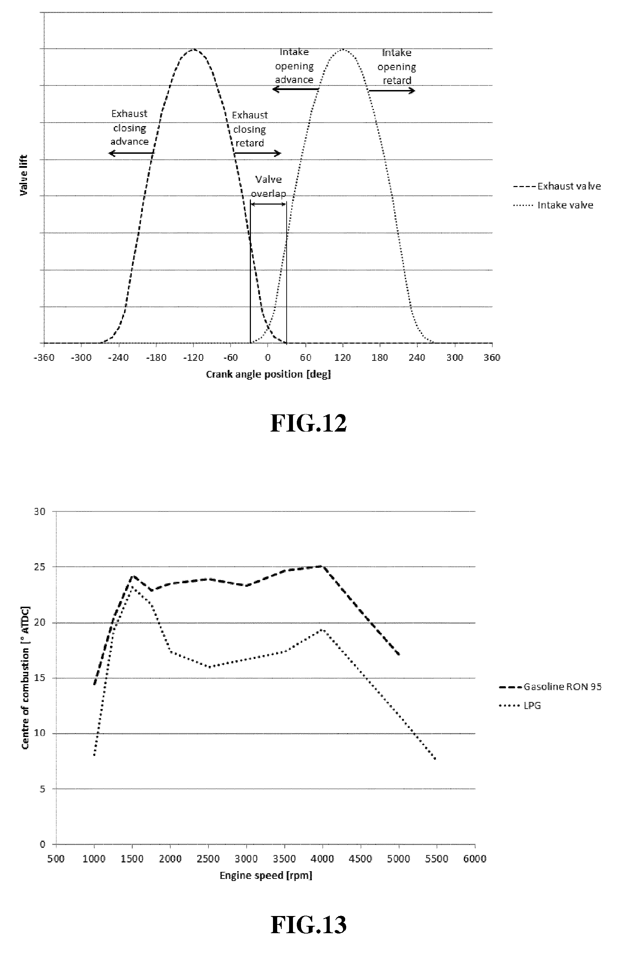

As explained above, actuation of the intake and exhaust valves is done by means of cams inserted in camshafts which rotate synchronically with the crankshaft of the engine. The ECU might alter the synchronism by some degrees activating electric or electrohydraulic actuators at the end of the camshafts. Figure 12 shows a typical diagram of valve lift against crank angle and the possible alteration of the phasing of the valve lifts. The duration of the valve overlap has a strong influence on the pumping losses of the engine. During the interval when the piston is drawing gases inside the cylinder and the exhaust valves remain open, mostly exhaust gases are reintroduced through the exhaust valve inside the cylinder. This is so because the throttle valve creates a restriction in the intake side, while there is no such restriction for the flow of exhaust gases back to the cylinder. This process is usually called internal exhaust gas recirculation (EGR). Since a given mass of fresh air must be sucked inside the cylinder for a given power, internal EGR typically leads to an opening of the throttle valve, which in turn reduces the pumping losses of the engine. There is a limit for the use of internal EGR since the reintroduced exhaust gases create instability in combustion.

In the LPG direct injection engine of the present invention, the volatility of the fuel greatly improves mixture formation, which in turn enhances the stability of the combustion. Thus, LPG tolerates greater amounts of recirculated exhaust gases before reaching the design limits for stability. Depending on the working conditions of the engine, the valve overlap in the LPG direct injection engine of the present invention can be increased by 2 to to 10 degrees of crank angle with respect to a gasoline direct injection engine under the same working conditions. This in turn can reduce the energy consumed by the engine by 1 to 4 %, depending on the load and speed conditions, for equivalent performance and emission levels. The effect is particularly interesting at low loads where the throttle is comparatively more closed and where engines for automotive applications are extensively used.

### Advantages over ignition timing

From an efficiency point of view, the ideal combustion phasing of a spark ignition engine is to set the centre of combustion (the time at which 50 % of the fuel mass has been burnt) approximately 8 degrees after top dead centre. For this purpose, ignition timing must be set accordingly. However, there are some limitations to this ideal situation. Typically, two design limits must be considered when setting ignition timing. On the one hand, as load increases, spark ignition engines are more prone to abnormal combustion (knocking). Since this is a destructive process, the engine must be protected against it. Usually this is realised by delaying ignition, which deteriorates engine efficiency. On the other hand, the engine is designed to withstand a certain maximum combustion pressure due to the mechanical limits of its components. As load increases, maximum combustion pressure increases. If the maximum combustion pressure is reached, load can only be increased spreading the heat release caused by the combustion over a longer time. Again, this can be accomplished by delaying ignition timing with its attending loss of engine efficiency.

Since LPG has a higher octane number (both research octane number RON and motor octane number MON) than gasoline, the LPG direct injection engine of the present invention can be operated with a more favourable combustion phasing in a wider area than an equivalent gasoline engine. Figure 13 shows the combustion phasing of an engine operated at full load with gasoline and LPG and producing the same power for both fuels. In the region of 2000 to 5000 rpm, combustion can be advanced by 5 to 8 crank angle degrees for LPG.

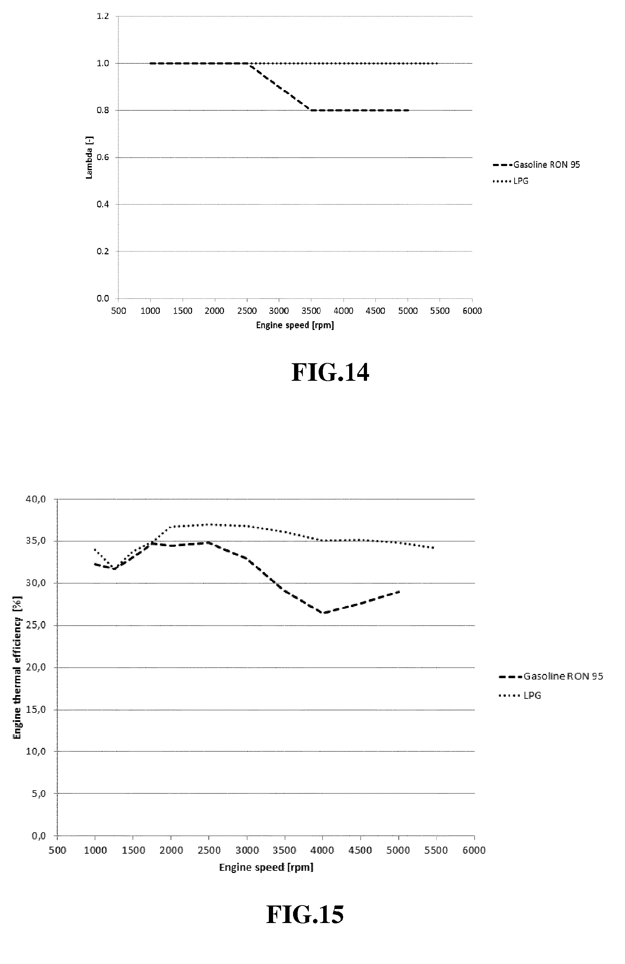

When ignition is retarded, exhaust temperatures tend to increase. However, there are certain design temperature limits of the components in the exhaust system and exhaust temperature must be controlled. This is usually accomplished by injecting an extra quantity of fuel and operating the engine with rich mixture (excess of fuel). Inevitably, this leads to an increase in fuel consumption. Due to the more favourable combustion phasing obtained with LPG, the present LPG direct injection engine can operate in stoichiometric conditions up to full load, which is an advantage over operation with gasoline as shown in Figure 14.

Finally, the combination of a more favourable combustion phasing and operating the engine in stoichiometric conditions leads to an improvement of engine thermal efficiency in the LPG direct injection engine of the present invention. Figure 15 shows a comparison of engine efficiency between the LPG direct injection engine of the present invention and a gasoline direct injection engine for full load and equal power. In the region of 2000 to 5000 rpm there are differences ranging from 2 to 9 percentage points in favour of the LPG direct injection engine. These differences indicate that, for the same performance, the present LPG direct injection engine consumes less energy provided by the fuel.

### Advantages over CO₂ emissions

As explained above, the LPG direct injection engine of the present invention improves its thermal efficiency compared to a gasoline engine due to the more favourable properties of the fuel. In particular, an ideal ignition timing (centre of combustion around 8 °ATDC), dispensing with the need to enrich the mixture at high loads and a wider valve overlap together contribute to reduce the energy needs of the LPG direct injection engine and for the same or better performance and emissions as with a gasoline engine. Thus, CO₂ emissions are reduced as a consequence of the reduced energy needs of the engine.

Additionally, LPG has a more favourable hydrogen to carbon ratio than gasoline. This means that, for the same energy released in the combustion, LPG produces less CO₂. For typical compositions of LPG and gasoline, the reduction in CO₂ varies from 10 to 12 % taking gasoline as the reference.

Therefore, the addition of the effects of an increase in the efficiency of the engine and the more favourable hydrogen to carbon ratio of LPG leads to an average reduction in CO₂ emissions in the range of 13 to 16 % depending on the use of the engine and the LPG composition. In the high load area where gasoline must enrich the mixture in order to reduce exhaust temperature, the reduction in CO₂ emission might increase to 33 % in favour of LPG.

### Advantages over cold start

Historically, LPG engines use the fuel in gaseous phase. This means that they start with gasoline and, after some time, they are switched to LPG. It is done in this way because LPG is stored in liquid phase in the tank and, in order to generate LPG in gas phase, the fuel is circulated through a heat exchanger, called evaporator, where the coolant of the engine evaporates the liquid LPG. Since the coolant temperature is low during a cold start of the engine, the evaporator cannot generate LPG in gaseous phase until the coolant reaches a certain temperature (typically 80 °C). In the LPG direct injection engine of the present invention LPG is directly injected in liquid phase. Thus, the fuel is available for injection since the start of the engine.

The cold start phase of a spark ignition engine using gasoline is a period where special attention must be paid to control the air-fuel ratio. When the engine is cold (coolant temperature below 50 °C), part of the gasoline injected is not evaporated and reaches the cylinder walls. Also, in order to have a stable combustion without misfires, a rich air-fuel ratio with more gasoline is used. Therefore, more gasoline than what would be necessary in hot conditions is injected during the cold start phase, causing an increase in fuel consumption.

With the LPG direct injection engine of the present invention, there is no need to enrich the mixture. Due to the higher volatility of LPG compared to gasoline and to the relatively high injection pressure (approximately 70 bar for the relevant conditions), mixture formation between air and fuel is similar to the results reached at hot conditions. Therefore, a relatively simple strategy for cold start may be applied using a single injection of LPG and setting the ignition timing for an optimal heating of the catalyst.

The overall result of this advantage is that the LPG direct injection engine of the present invention, when installed in a vehicle, can comply with the strictest emission limitations, such as Euro 6c in Europe. Furthermore, dispensing with the need to enrich the air-fuel ratio to maintain stable combustion during cold start and using a strategy to heat up the three-way catalyst in a convenient way leads to a reduction in the energy needs of the engine for the cold start phase. This in turn leads to a further reduction in CO₂ emissions.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. Liquefied petroleum gas direct injection engine (100) comprising at least one cylinder, each cylinder comprising:
- a combustion chamber (1) having a spark plug (2);
- one or more intake valve or valves (4) for letting air come inside the combustion chamber (1);
- one or more exhaust valve or valves (5) for letting exhaust gases go out of the combustion chamber (1);
wherein the LPG direct injection engine (100) further comprises:
- at least one injector (6) for injecting liquefied petroleum gas in liquid state directly into the combustion chamber, the liquefied petroleum gas being injected at a pre-established pressure value;
- a high pressure pump (9) for feeding pressurized liquefied petroleum gas to at least one injector (6);
- an electronic control unit (13) configured to operate the at least one injector (6) for injecting the liquefied petroleum gas:
- during a specific injection time period or periods such that a predefined target mass of liquefied petroleum gas is injected; and
- between 360 º BTDC and 60 º BTDC of the engine cycle.

2. Liquefied petroleum gas direct injection engine (100) according to claim 1, wherein the predefined target mass of liquefied petroleum gas to be injected by the at least one injector is determined by means of correction model of the LPG density at the output of such at least one injector.

3. Liquefied petroleum gas direct injection engine (100) according to claim 2, wherein the estimation model of the liquefied petroleum gas density uses a density map based on physical properties of the liquefied petroleum gas, and uses as input a measured pressure of the liquefied petroleum gas in the nozzle (61) and a determined temperature of the liquefied petroleum gas in the nozzle (61).

4. Liquefied petroleum gas direct injection engine (100) according to claim 3, wherein for determining the temperature of the liquefied petroleum gas in the nozzle (61) a set of parameters of the engine is used.

5. Liquefied petroleum gas direct injection engine (100) according to any of claims 1-4, wherein the electronic control unit (13) is configured to operate the intake valve or valves (4) and the exhaust valve or valves (5) such that the valve overlap is 2 to 10 crank angle degrees greater than for a gasoline direct injection engine working under the same load and speed conditions.

6. Liquefied petroleum gas direct injection engine (100) according to any of claims 1-5, wherein the electronic control unit (13) is configured to operate the spark plug (2) for igniting the mixture of air and liquefied petroleum gas such that the centre of combustion is 6 to 10 ° ATDC throughout the whole map of the engine.

7. Liquefied petroleum gas direct injection engine (100) according to any of claims 1-5, wherein the electronic control unit (13) is configured to operate the spark plug (2) for igniting the mixture of air and liquefied petroleum gas when the engine is at its maximum combustion pressure such that ignition timing is advanced 5 to 8 crank angle degrees with respect to a gasoline direct injection engine also at its maximum combustion pressure.

8. Liquefied petroleum gas direct injection engine (100) according to any of claims 1-7, which further comprises a cylinder deactivation system to operate either with all the cylinders simultaneously or with half the cylinders.

9. Liquefied petroleum gas direct injection engine (100) according to any of claims 1-8, wherein the pre-established pressure value is below 200 bar.

10. Control method of a liquefied petroleum gas direct injection engine (100), which comprises:
- operating at least one injector (6) of the direct injection engine for injecting liquefied petroleum gas in liquid state directly into a combustion chamber (1) of the engine, the liquefied petroleum gas being injected at a pre-established pressure value;
- operating the at least one injector (6) for injecting the liquefied petroleum gas between 360 º BTDC and 60 º BTDC of the engine cycle;
- operating the at least one injector (6) for injecting the liquefied petroleum gas during a specific time period such that a predefined target mass of liquefied petroleum gas is injected.

11. Liquefied petroleum gas direct injection engine (100) comprising at least one cylinder, each cylinder comprising:
- a combustion chamber (1) having a spark plug (2);
- an intake valve or valves (4) for letting air come inside the combustion chamber (1);
- an exhaust valve or valves (5) for letting exhaust gases go out of the combustion chamber (1);
wherein the LPG direct injection engine (100) further comprises:
- at least one injector (6) for injecting liquefied petroleum gas in liquid state directly into the combustion chamber, the liquefied petroleum gas being injected at a pre-established pressure value;
- a high pressure pump (9) for feeding pressurized liquefied petroleum gas to at least one injector (6);
- an electronic control unit (13) configured to operate the intake valve or valves (4) and the exhaust valve or valves (5) such that valve overlap is 2 to 10 crank angle degrees greater than for a gasoline direct injection engine working under the same load and speed conditions.

12. Control method of a liquefied petroleum gas direct injection engine (100), which comprises:
- operating at least one injector (6) of the direct injection engine (100) for injecting liquefied petroleum gas in liquid state directly into a combustion chamber (1) of the engine, the liquefied petroleum gas being injected at a pre-established pressure value;
- operating one or more intake valve or valves (4) and one or more exhaust valve or valves (5) of the direct injection engine (100) such that valve overlap is 2 to 10 crank angle degrees greater than for a gasoline direct injection engine working under the same load and speed conditions.
